# EUROPÄISCHE PATENTSCHRIFT

(11) **EP 2 906 442 B1**
(45) Veröffentlichungstag und Bekanntmachung des Hinweises auf die Patenterteilung: **13.06.2018**
(21) Anmeldenummer: 13779780.9
(22) Anmeldetag: 11.10.2013
(51) Int. Cl.: B60N 2/10, B60N 2/66, F16D 11/00, B60N 2/90, B60N 2/16, B60N 2/18, B60N 2/22

(54) **VORRICHTUNG ZUM VERSTELLEN EINER KRAFTFAHRZEUGINNENAUSSTATTUNGSKOMPONENTE**
DEVICE FOR ADJUSTING A MOTOR VEHICLE INTERIOR COMPONENT
DISPOSITIF DE RÉGLAGE D'UN COMPOSANT D'ÉQUIPEMENT INTÉRIEUR DE VÉHICULE AUTOMOBILE

(30) Priorität: 12.10.2012 DE 102012020023
(43) Veröffentlichungstag der Anmeldung: 19.08.2015
(73) Patentinhaber: Adient Luxembourg Holding S.à r.l., 1855 Luxembourg (LU)
(72) Erfinder: STEMMER, Jürgen, 42897 Remscheid (DE); GERDT, Dmitrij, 50670 Köln (DE); SAMOJLOVA, Tatjana, 42799 Leichlingen (DE)
(74) Vertreter: Liedhegener, Ralf
(86) Internationale Anmeldenummer: PCT/EP2013/071283
(87) Internationale Veröffentlichungsnummer: WO 2014/057091

(56) Entgegenhaltungen:
- EP-A1- 0 857 606
- DE-A1- 10 338 306

## Beschreibung

Die vorliegende Erfindung betrifft eine Verstellvorrichtung insbesondere für eine Kraftfahrzeuginnenausstattungskomponente, die beispielsweise zur Verstellung eines Fahrzeugsitzes und/oder einer seiner Komponenten eingesetzt wird.

Solche Verstellvorrichtungen sind aus dem Stand der Technik bekannt und weisen jeweils eine Arretierungsvorrichtung auf, welche eine Sperrung der Verstellvorrichtung aufgrund eines Reibschlusses zwischen einem Bremsring und Bremselementen gewährleistet. Die Sperrung wird nur dann aufgehoben, wenn vom Benutzer eine Verstellbewegung eingeleitet wird. Bei Vibrationen besteht jedoch die Gefahr, dass die Reibschlussverbindung beeinträchtigt wird und somit eine ungewollte Verstellung der Kraftfahrzeuginnenausstattungskomponente eintritt.

Aus der dem Oberbegriff entsprechenden EP 0 857 606 A1 ist eine Vorrichtung zum Einstellen der Position eines Kraftfahrzeugsitzes umfassend einen mit einem drehbaren Element angetrieben Mechanismus bekannt. Eine Verriegelungs- / Entriegelungsvorrichtung, eingerichtet zum Halten der eingestellten Position, umfasst eine feststehende Sperrverzahnung und einen Schieber, der mit einer Verzahnung zum selektiven Eingriff mit der feststehenden Verzahnung versehen ist. Der Schieber ist gleitend in einer drehbaren Führung und integral mit dem drehbaren Antriebselement ausgestaltet. Ein drehbarer Betätigungshebel ist mittels integraler Nocken eingerichtet, mit dem Schieber in Eingriff zu gelangen.

Aus der DE 103 38 306 A1 ist ein beidseitig wirkender, manueller Antrieb zur Erzeugung einer Drehbewegung bekannt, die wahlweise, ausgehend von einer Nullpunktlage eines um eine Antriebsachse schwenkbaren und mit Kopplungsmitteln gekoppelten Antriebshebels, in die eine oder andere Antriebsrichtung erfolgt, wobei ein mit den Kopplungsmitteln in Eingriff bringbares Abtriebsrad nur dann gedreht wird, wenn sich der Antriebshebel von der Nullpunktlage wegbewegt, während bei einer Bewegung des Antriebshebels in Richtung der Nullpunktlage das Abtriebsrad nicht mitgenommen wird.

Es ist deshalb die Aufgabe der vorliegenden Erfindung, eine Verstellvorrichtung zur Verfügung zu stellen, bei der die Gefahr einer ungewollten Verstellung, insbesondere aufgrund von Vibrationen, zumindest reduziert ist und gleichzeitig eine einfache Handhabung sowie eine modulare und daher besonders kostengünstige Herstellung ermöglicht werden, ohne die ursprünglichen Eigenschaften zu verändern, insbesondere den Leerweg zu vergrößern.

Gelöst wird diese Aufgabe mit einer Verstellvorrichtung für eine Kraftfahrzeuginnenausstattungskomponente laut Anspruch 1 mit einem Gehäuse, in dem ein Drehelement um eine Drehachse drehbar vorgesehen ist, wobei drehfest mit dem Drehelement ein erstes Arretierungselement vorgesehen ist und an dem Gehäuse ein zweites Arretierungselement drehfest vorgesehen ist, die relativ zueinander von einer Sperrsituation, in der die Arretierungselemente form- und/oder kraftschlüssig miteinander zusammenwirken, in eine Verstellsituation, in der dieser Form- und/oder Kraftschluss aufgehoben ist, reversibel bewegbar sind und wobei die Verstellvorrichtung eine Adapterplatte aufweist, die drehbar zu dem Drehelement und dem Gehäuse vorgesehen ist und ein Arretierungselement zumindest zeitweise antreibt.

Die vorliegende Erfindung betrifft eine Verstellvorrichtung insbesondere für eine Kraftfahrzeuginnenausstattungskomponente. Diese weist ein Gehäuse auf, in dem ein Drehelement um eine Drehachse drehbar vorgesehen ist. Beispielsweise ist das Gehäuse an einem ersten Teil und das Drehelement an einem zweiten Teil, das drehbar zu dem ersten Teil ist, vorgesehen. Weiterhin weist die Verstellvorrichtung eine Arretierungsvorrichtung auf, die zumindest aus einem ersten und einem zweiten Arretierungselement besteht, wobei das erste Arretierungselement drehfest an dem Drehelement und das zweite Arretierungselement drehfest an dem Gehäuse angeordnet ist. Beide Arretierungselemente weisen Form- und/oder Kraftschlussmittel auf, die in der Sperrsituation form- und/oder kraftschlüssig zusammenwirken und dadurch eine ungewollte Relativbewegung zwischen dem Drehelement und dem Gehäuse zumindest weitestgehend verhindern. In der Verstellsituation wird dieser Form- und/oder Kraftschluss reversibel aufgehoben.

Gemäß einer bevorzugten Ausführungsform ist das erste Arretierungselement flächig ausgebildet, insbesondere scheibenförmig und/oder stabförmig. Besonders bevorzugt handelt es sich bei dem Form- und/oder Kraftschlussmittel um eine Struktur, insbesondere um eine gezahnte Struktur, insbesondere um ein oder mehrere Zähne. Ganz besonders bevorzugt handelt es sich bei dem ersten Arretierungselement um eine kreisförmige Scheibe mit einer Verzahnung am äußeren Umfang, insbesondere ein Ritzel, die beispielsweise über ein Loch in ihrer Mitte mit dem Drehelement drehfest verbunden ist, vorzugsweise durch einen Stoffschluss, insbesondere eine Schweißung. Hierdurch ist es in vorteilhafter Weise möglich, dass ein gebräuchliches Standardelement verwendet werden kann, was eine hohe Modularisierung der Verstellvorrichtung und damit direkt und/oder indirekt Kosteneinsparungen bedeutet. Weiterhin ist es so in vorteilhafter Weise möglich, einen guten Form- und/oder Kraftschluss mit dem zweiten Arretierungselement zu erzielen.

Vorzugsweise weist das zweite Arretierungselement eine im Wesentlichen flächige Erstreckung auf, insbesondere mit einer generellen Längserstreckung, insbesondere ist es stegförmig ausgeprägt. Vorzugsweise ist das zweite Arretierungselement ein gebogenes und/oder gestanztes Blechteil. Besonders bevorzugt ist es aus einem Federstahl gefertigt. Ganz besonders bevorzugt weist das zweite Arretierungselement im Wesentlichen in wenigstens eine Richtung eine Erstreckung über den Querschnitt des gesamten Gehäuses auf. Noch mehr bevorzugt weist das zweite Arretierungselement an wenigstens einer Stelle, insbesondere an einem Ende, ein Befestigungsmittel zur festen Verbindung mit dem Gehäuse auf. Vorzugsweise ist die Verbindung zwischen dem zweiten Arretierungselement und dem Gehäuse eine Schnappverbindung. Gemäß einer vorteilhaften Ausführungsform weist das Befestigungsmittel Stege mit Vorsprüngen auf, die in dem Fachmann bekannter Weise an dem Gehäuse befestigt werden. Vorzugsweise erstreckt sich das zweite Arretierungselement mittig über das Gehäuse der Verstellvorrichtung. Vorzugsweise weist es, insbesondere in seiner Mitte, eine Ausnehmung und/oder Ausformung auf, in/an der das Drehelement gelagert ist, so dass das erste Arretierungsmittel und/oder das Drehelement drehbar gelagert sind, während das zweite Arretierungselement ortsfest bleibt.

Gemäß einer weiteren vorteilhaften Ausführungsform weist das Form- und/oder Kraftschlussmittel des zweiten Arretierungselements eine Struktur, insbesondere eine zahnförmige Struktur auf, die als korrespondierende Struktur zu dem Form- und/oder Kraftschlussmittel des ersten Arretierungselements ausgebildet ist. Vorzugsweise greift in der Sperrsituation die zahnförmige Struktur des zweiten Arretierungselements in die gezahnte Struktur des ersten Arretierungselements ein, während in der Verstellsituation die zahnförmige Struktur außer Eingriff mit der gezahnten Struktur gebracht ist.

Gemäß einer bevorzugten Ausführungsform ist vorgesehen, dass das zweite Arretierungselement zumindest teilweise, insbesondere ein Ende des zweiten Arretierungselementes, entlang einer axialen Verschieberichtung beweglich gelagert ist. Insbesondere wird zum Überführen der Arretierungsvorrichtung von der Sperrsituation in die Verstellsituation das zweite Arretierungselement zumindest teilweise entlang der Verschieberichtung verschoben, damit die Zähne des ersten Arretierungselementes außer Eingriff mit der gezahnten Struktur des zweiten Arretierungselementes gebracht werden. Vorzugsweise erfolgt die Bewegung des zweiten Arretierungselementes mit einer Richtungskomponente parallel zu der Drehachse des Drehelementes. Denkbar ist jedoch auch eine radiale Verschieberichtung des zweiten Arretierungselements bezogen auf die Drehachse des Drehelementes.

Vorzugsweise ist das zweite Arretierungselement in Richtung des ersten Arretierungselementes oder in eine andere Richtung vorgespannt.

Gemäß einer bevorzugten Ausführungsform ist vorgesehen, dass das zweite Arretierungselement ein Entriegelungselement aufweist, wobei vorzugsweise das Entriegelungselement die Form einer Materialausstülpung auf der einem Betätigungsmittel abgewandten Seite aufweist. Es kann sich aber auch um eine Einbuchtung handeln. Das Betätigungsmittel ist vorzugsweise an der Adapterplatte vorgesehen, die relativ beweglich, insbesondere drehbar, zu dem Drehelement und/oder dem zweiten Arretierungselement vorgesehen ist. Das Betätigungsmittel ist besonders bevorzugt aus der Adapterplatte ausgeformt. Das Betätigungselement kann aber auch durch Urformen oder durch ein spanabhebendes Verfahren an dem zweiten Arretierungselement vorgesehen werden. Besonders bevorzugt weist das Betätigungsmittel der Adapterplatte eine mit der Materialausstülpung korrespondierende Form auf, wobei das Betätigungsmittel in der Sperrsituation formschlüssig und/oder kraftschlüssig in das Entriegelungselement des zweiten Arretierungselementes eingreift. Dadurch kann es Kräfte und/oder Drehmomente, die auf das zweite Arretierungselement einwirken, aufnehmen. Denkbar ist jedoch auch, dass das zweite Arretierungselement eine ebene Fläche hat, mit welcher das Betätigungsmittel zur Wechselwirkung derart vorgesehen ist, dass das zweite Arretierungsmittel entlang der Verschieberichtung verschoben wird.

Gemäß einer ganz besonders bevorzugten Ausführungsform weist die Adapterplatte eine im Wesentlichen flächige Erstreckung auf, insbesondere im Wesentlichen eine scheibenförmige Erstreckung, wobei die Adapterplatte das Betätigungsmittel aufweist, wobei das Betätigungsmittel der Adapterplatte zur Wechselwirkung mit dem zweiten Arretierungselement vorgesehen ist. Beim Überführen von der Sperrsituation in die Verstellsituation wird das zweite Arretierungselement, insbesondere das Entriegelungselement, von dem Betätigungsmittel der Adapterplatte kraftbeaufschlagt, um das zweite Arretierungselement entlang der Verschieberichtung zu bewegen, insbesondere zu verschieben. Insbesondere geschieht das Überführen von der Sperrsituation in die Verstellsituation durch Betätigung des Entriegelungselements und damit auch der Adapterplatte.

Gemäß einer besonders bevorzugten Ausführungsform weist die Verstellvorrichtung ferner eine weitere Arretierungsvorrichtung auf, welche zwischen der Sperrsituation und der Verstellsituation bewegbar ist, wobei die Arretierungsvorrichtung dann zu einer Bewegung zwischen einer Verriegelungsposition zum Sperren einer Drehung des Drehelements relativ zu einem Bremsring und einer Entriegelungsposition zum Freigeben einer Drehung des Drehelements relativ zu dem Bremsring vorgesehen ist.

Gemäß einer bevorzugten Ausführungsform ist die weitere Arretierungsvorrichtung derart ausgebildet, dass in der Sperrsituation ein Form- und Kraftschluss, insbesondere ein Reibschluss, zwischen dem Bremsring und einem Bremselement erzeugt wird, während die erste Arretierungsvorrichtung derart ausgebildet ist, dass in der Verriegelungsposition im Wesentlichen nur ein Formschluss erzeugt wird. In vorteilhafter Weise ermöglicht eine reine Formschlussverbindung eine sehr gute Sicherung gegenüber einem unbeabsichtigten Verstellen des Drehelements aufgrund von Vibrationen.

Gemäß noch einer weiteren bevorzugten Ausführungsform weist die weitere Arretierungsvorrichtung wenigstens ein zwischen dem Bremsring und dem Drehelement angeordnetes Bremselement auf, wobei die Arretierungsvorrichtung dann zwischen der Verriegelungsposition zum Sperren einer Drehung des Drehelements relativ zu dem Bremsring und der Entriegelungsposition zum Freigeben einer Drehung des Drehelements relativ zu dem Bremsring bewegbar ist.

Vorzugsweise ist das Entriegelungselement zum Überführen der Arretierungsvorrichtung von der Verriegelungsposition in die Entriegelungsposition vorgesehen. Zur Verstellung der Kraftfahrzeugkomponente muss somit lediglich das Entriegelungselement betätigt werden, um sowohl die Arretierungsvorrichtung als auch die weitere Arretierungsvorrichtung zu entsperren. Der Komfort für einen Fahrzeuginsassen wird somit trotz der verdoppelten Arretierung nicht beeinträchtigt.

Die erfindungsgemäße Verstellvorrichtung ist vorzugsweise Teil eines Sitzhöhenverstellmechanismus, eines Sitzneigungsverstellmechanismus, eines Sitzlehnenneigungsverstellmechanismus, eines Lordosenstützenverstellmechanismus, eines Kopfstützenverstellmechanismus oder dergleichen.

Die Verstellvorrichtung eignet sich aber zu jeder beliebigen anderen Verstellung eines Teils relativ zu einem anderen.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.
- **Figur 1**: zeigt eine schematische Ansicht einer Verstellvorrichtung gemäß einer beispielhaften Ausführungsform der vorliegenden Erfindung.
- **Figur 2**: zeigt eine schematische Schnittzeichnung der Verstellvorrichtung gemäß der Figur 1.
- **Figur 3**: zeigt eine schematische Ansicht des ersten Arretierungselements der Arretierungsvorrichtung der Verstellvorrichtung gemäß Figur 1.
- **Figur 4**: zeigt eine schematische Ansicht des zweiten Arretierungselements der Arretierungsvorrichtung einer Verstellvorrichtung gemäß der beispielhaften Ausführungsform der vorliegenden Erfindung.
- **Figur 5**: zeigt eine schematische Detailansicht des zweiten Arretierungselements der Arretierungsvorrichtung einer Verstellvorrichtung gemäß Figur 1.
- **Figur 6**: zeigt eine schematische Detailansicht des ersten Arretierungselements und des zweiten Arretierungselements der Arretierungsvorrichtung in der Sperrsituation einer Verstellvorrichtung gemäß Figur 1.
- **Figur 7**: zeigt eine schematische Detailansicht der Arretierungsvorrichtung in der Sperrsituation einer Verstellvorrichtung gemäß Figur 1.
- **Figur 8**: zeigt eine schematische Detailansicht der Arretierungsvorrichtung in der Verstellsituation einer Verstellvorrichtung gemäß Figur 1.
- **Figur 9**: zeigt eine schematische Schnittzeichnung der Arretierungsvorrichtung in der Sperrsituation einer Verstellvorrichtung gemäß Figur 1.
- **Figur 10**: zeigt eine schematische Schnittzeichnung der Arretierungsvorrichtung beim Übergang von der Sperrsituation in die Verstellsituation einer Verstellvorrichtung gemäß Figur 1.
- **Figur 11**: zeigt eine schematische Schnittzeichnung der Arretierungsvorrichtung in der Verstellsituation einer Verstellvorrichtung gemäß Figur 1.
- **Figur 12**: zeigt eine schematische Schnittzeichnung der Arretierungsvorrichtung in der Sperrsituation einer Verstellvorrichtung gemäß Figur 1.
- **Figur 13**: zeigt eine schematische Schnittzeichnung der Arretierungsvorrichtung in der Verstellsituation einer Verstellvorrichtung gemäß Figur 1.
- **Figur 14**: zeigt eine schematische Detailansicht des ersten Arretierungselements und des zweiten Arretierungselements der Arretierungsvorrichtung in der Sperrsituation mit dem weitest möglichen Verstellweg einer Verstellvorrichtung gemäß Figur 1.

In den verschiedenen Figuren sind gleiche Teile stets mit den gleichen Bezugszeichen versehen und werden daher in der Regel auch jeweils nur einmal benannt bzw. erwähnt.

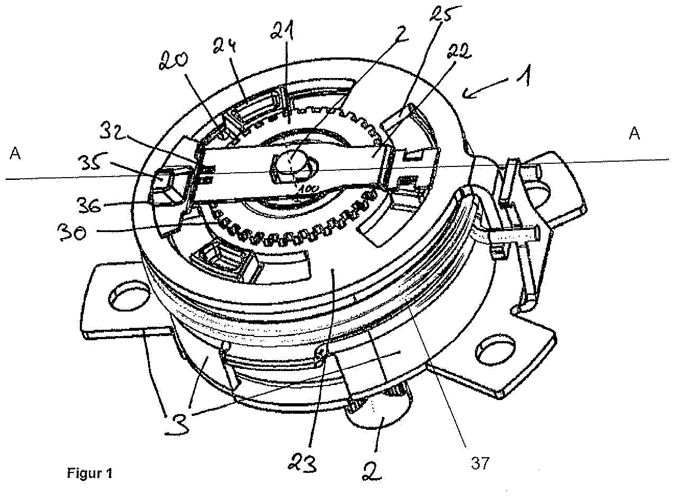

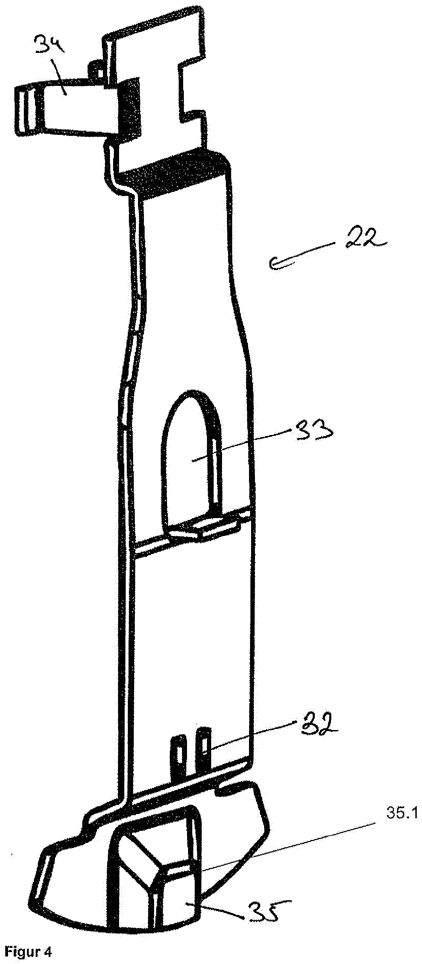

In **Figur 1** ist eine schematische Ansicht einer Verstellvorrichtung 1 gemäß einer beispielhaften Ausführungsform der vorliegenden Erfindung für eine nicht dargestellte Kraftfahrzeugkomponente dargestellt. Die Verstellvorrichtung 1 weist eine zwischen einer Sperrsituation und einer Verstellsituation verstellbare Arretierungsvorrichtung 20 auf. In der Sperrsituation wird mittels der Arretierungsvorrichtung 20 eine Drehung eines Drehelements 2 um die Drehachse 100 relativ zu einem, vorzugsweise fahrzeugfesten, Gehäuse 3 verhindert. Die Arretierungsvorrichtung 20 weist ein erstes Arretierungselement 21 und ein zweites Arretierungselement 22 auf. Das erste Arretierungselement 21 ist drehfest mit dem Drehelement 2 verbunden. Das erste Arretierungselement 21 weist Form- und/oder Kraftschlusselemente 30 auf. Das erste Arretierungselement 21 ist vorzugsweise in Form eines Zahnrads ausgeprägt und weist dementsprechend an seinem umfänglichen Rand eine gezahnte Struktur 30 auf. Das zweite Arretierungselement 22 ist vorzugsweise als Sperrfeder ausgeprägt und vorzugsweise fest mit dem Gehäuse 3 verbunden. Das zweite Arretierungselement 22 weist vorzugsweise eine generelle Längserstreckung entlang der Linie A - A und vorzugsweise eine Ausnehmung 33 (vgl. Figur 4) auf, in der vorzugsweise die Drehachse des Drehelementes 2 gelagert ist. Diese Ausnehmung 33 wird vorzugsweise spanabhebend oder durch Umformen hergestellt. Weiterhin weist das zweite Arretierungselement 22 Form- und/oder Kraftschlussmittel, beispielsweise eine zahnförmige Struktur 32, auf, das in der Sperrsituation mit dem Form- und/oder Kraftschlussmittel 30 des ersten Arretierungselementes 21 form- und/oder kraftschlüssig verbunden ist und dadurch eine Bewegung des Drehelementes 2 relativ zu dem Gehäuse 3 verhindert. Ferner weist das zweite Arretierungselement 22 vorzugsweise ein Entriegelungselement 35 auf, über das es in der Sperrsituation form- und/oder kraftschlüssig mit einem Betätigungsmittel 36 verbunden ist, das insbesondere an einer Adapterplatte 23 vorgesehen ist. Bei einem Übergang des zweiten Arretierungselementes von der Sperrsituation in die Verstellsituation wird das zweite Arretierungselement 22 zumindest abschnittsweise entlang der Verschieberichtung 101 vorzugsweise parallel zu der Drehachse 100 von dem Betätigungsmittel 36 verschoben, insbesondere indem sich das zweite Arretierungselement elastisch verformt, und der Form- und/oder Kraftschluss zwischen dem ersten und dem zweiten Arretierungselement wird temporär aufgehoben. Die Adapterplatte 23 weist wenigstens ein Betätigungsmittel 36 sowie einen hier nicht dargestellten Antrieb auf, mit dem die Adapterplatte zum Zwecke der Entriegelung, insbesondere drehend, angetrieben werden kann. Der Antrieb kann jede dem Fachmann bekannte Form annehmen und über jede dem Fachmann bekannte Verbindung mit der Adapterplatte 23 verbunden sein. Bevorzugt handelt es sich bei dem Antrieb um einen Hebel, der vorzugsweise mit einem Rand der Adapterplatte 23 verbunden, insbesondere verschweißt ist.

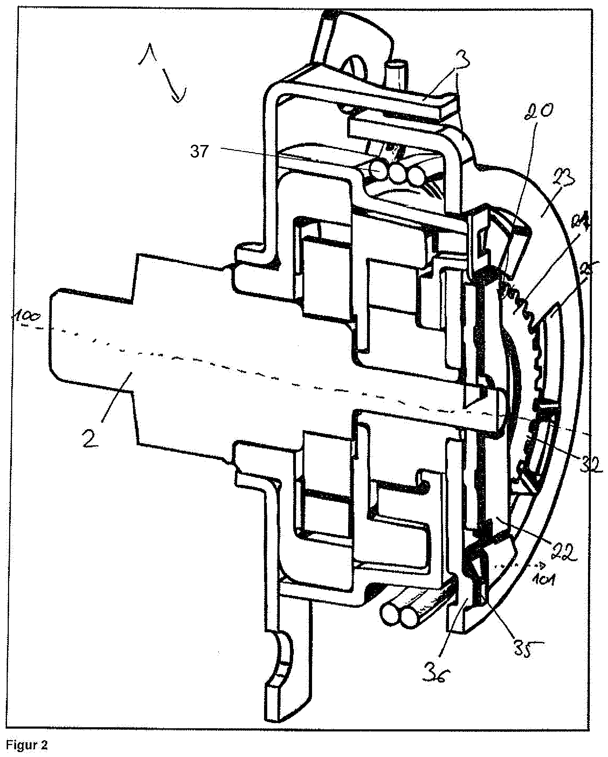

In Figur 2 ist eine schematische Schnittzeichnung einer Verstellvorrichtung 1 gemäß Figur 1 entlang der Schnittlinie A - A dargestellt. Das Drehelement 2 ist drehbar um die Drehachse 100 gelagert. Die Adapterplatte 23 ist sowohl relativ zu dem Gehäuse 3 als auch zu dem Drehelement 2 beweglich, insbesondere drehbar, vorgesehen. Die Adapterplatte ist derart ausgebildet, dass durch eine Drehung der Adapterplatte 23 das Entriegelungselement 35 durch das Betätigungsmittel 36 kraftbeaufschlagt wird und somit das zweite Arretierungselement 22 in die Verschieberichtung 101 verschoben und die Verriegelung aufgehoben wird. Vorzugsweise weisen dafür sowohl das Betätigungsmittel als auch das Verriegelungsmittel jeweils mindestens eine rampenartige Fläche auf, wodurch sich bei einer Bewegung der Adapterplatte 23 in einer Ebene, das zweite Arretierungselement 22 in einem Winkel, insbesondere in einem rechten Winkel, zu dieser Ebene entlang der Verschieberichtung 101 bewegt. Bevorzugt weist die Adapterplatte 23 Begrenzungsmittelaufnahmemittel 25 auf, so dass der mögliche Verstellweg der Adapterplatte 23 durch entsprechende Begrenzungsmittel 24 des Gehäuses 3 begrenzt wird, so dass das Betätigungsmittel 36 nicht außer Kontakt mit dem zweiten Arretierungsmittel 22 gerät. Hierdurch wird in vorteilhafter Weise eine ungewollte Sperrung der Verstellvorrichtung 1 verhindert. Ganz besonders bevorzugt weist das Gehäusemittel Federmittel 37 auf, die zur Rückführung der Adapterplatte 23 in ihre ursprüngliche Position vorgesehen sind. Bei der Bewegung, insbesondere Drehung, der Adapterplatte 23 in ihre ursprüngliche Stellung, federt das zweite Arretierungselement 22 in seine verriegelnde Stellung entgegengesetzt zu der Verschieberichtung 101 zurück.

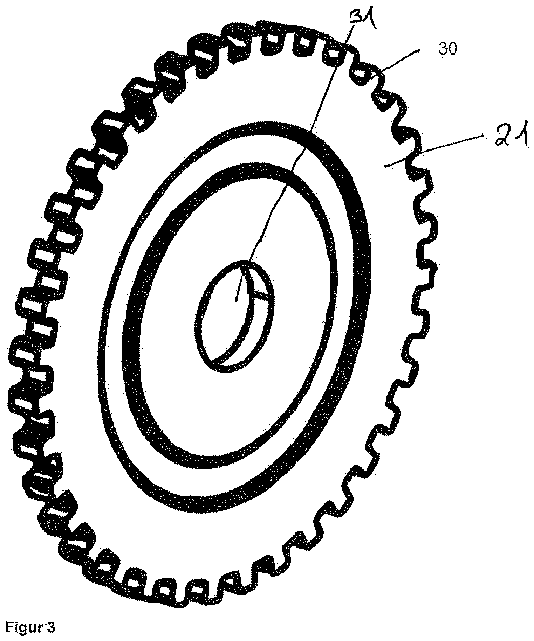

Figur 3 ist eine schematische Ansicht des ersten Arretierungselements 21 der Arretierungsvorrichtung 20 der Verstellvorrichtung 1. Das erste Arretierungselement 21 ist, hier über eine Ausnehmung 31, drehfest mit dem Drehelement 2 verbunden und geht in der Sperrsituation, hier über die gezahnte Struktur 30, eine formschlüssige Verbindung mit dem zweiten Arretierungselement 22 ein.

In Figur 4 ist eine schematische Ansicht des zweiten Arretierungselements 22 der Arretierungsvorrichtung 20 der Verstellvorrichtung 1 dargestellt. Das zweite Arretierungselement 22 ist vorzugsweise als Biegeblechteil, insbesondere aus Federstahl, hergestellt. Es ist vorzugsweise als stegförmige Sperrfeder ausgebildet und weist eine Ausnehmung 33 sowie ein Befestigungsmittel 34 auf. Das zweite Arretierungselement 22 ist über das Befestigungsmittel 34 und/oder gegebenenfalls die Ausnehmung 33 ortsfest mit dem Gehäuse 3 verbunden, wobei vorzugsweise nur ein Ende, insbesondere das Ende, das dem Entriegelungselement 35 und/oder dem Form- und/oder Kraftschlussmittel 32 gegenüberliegt, mit dem Gehäuse verbunden ist, damit sich das andere Ende, an dem das Entriegelungselement 35 und/oder das Form- und/oder Kraftschlussmittel 32 vorgesehen sind, entlang der Verschieberichtung 101 bewegen kann. Das zweite Arretierungselement 22 weist vorzugsweise ein Entriegelungselement 35 auf, welches vorzugsweise als Materialausstülpung auf der der Verstellvorrichtung 1 abgewandten Seite ausgebildet ist. Vorzugsweise weist diese Ausformung schräge Flächen 35.1 auf, die mit korrespondierenden, insbesondere schrägen, Flächen an dem Betätigungsmittel zusammenwirken, um eine Bewegung des zweiten Arretierungsmittels in die Verschieberichtung 101 zu erzeugen. Besonders bevorzugt ist das Entriegelungselement 35 als Pyramidenstumpf ausgebildet. Das zweite Arretierungselement 22 ist mittels des Entriegelungselements 35 in der Sperrsituation mit dem Betätigungsmittel 36 der Adapterplatte form- und/oder kraftschlüssig verbunden. Beim Übergang von der Sperrsituation in die Verstellsituation, bedingt durch eine Rotation der Adapterplatte 23 um die Drehachse 100, wird das Entriegelungselement 35 durch das Betätigungsmittel 36 kraftbeaufschlagt und dadurch entlang der Verschieberichtung 101 bewegt. Dabei verformt sich das zweite Arretierungselement 22 vorzugsweise elastisch. Ferner weist das zweite Arretierungselement 22 Form- und/oder Kraftschlussmittel 32, hier eine zahnförmige Struktur 32, auf, über die es in der Sperrsituation form- und/oder kraftschlüssig mit dem Form- und/oder Kraftschlussmittel 30, hier der gezahnten Struktur 30, des ersten Arretierungselements 21 verbunden ist. Das Form- und/oder Kraftschlussmittel wird vorzugsweise durch Stanzen und/oder Umformen in das Arretierungselement 22 eingearbeitet.

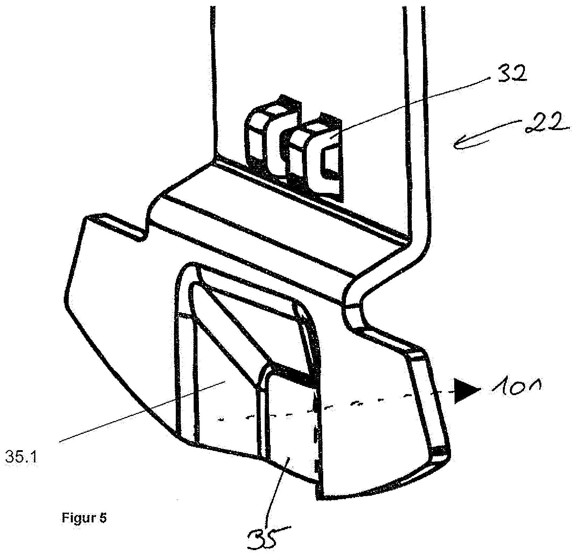

In Figur 5 ist eine schematische Detailansicht des zweiten Arretierungselements 22 der Arretierungsvorrichtung 20 der Verstellvorrichtung 1 dargestellt. Insbesondere ist hier die der Adapterplatte 23 und/oder dem Gehäuse 3 zugewandte Seite des zweiten Arretierungselements 22 dargestellt. Die durch die Materialausstülpung entstandene Vertiefung des Entriegelungselements 35, die in der Sperrsituation mit dem Betätigungsmittel 36 form- und/oder kraftschlüssig verbunden ist, ist deutlich zu erkennen, ebenso wie die zahnförmige Struktur 32 des zweiten Arretierungselements 22.

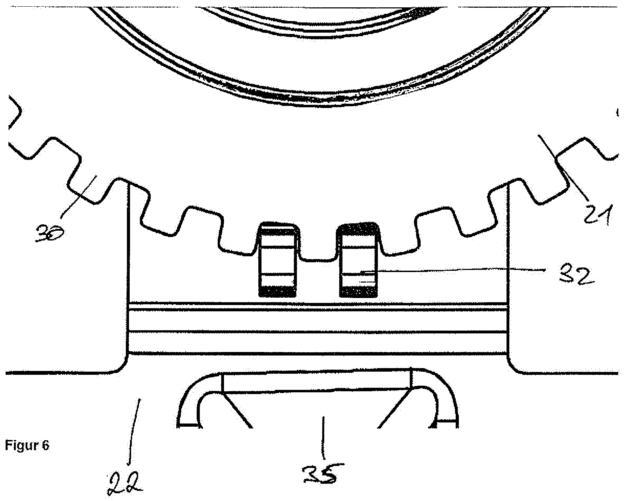

In Figur 6 ist eine schematische Detailansicht des ersten Arretierungselements 21 und des zweiten Arretierungselements 22 der Arretierungsvorrichtung 20 in der Sperrsituation der Verstellvorrichtung 1 dargestellt. Die zahnförmige Struktur 32 des zweiten Arretierungselements 22 ist formschlüssig mit der gezahnten Struktur 30 des ersten Arretierungselements 21 verbunden.

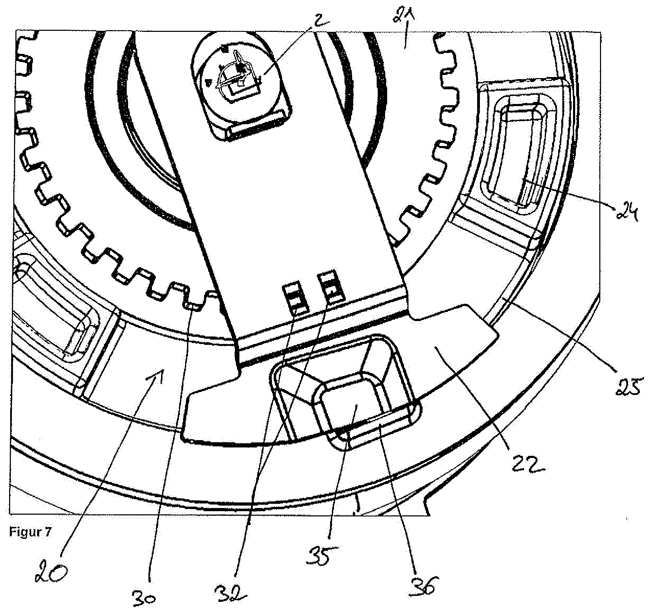

In Figur 7 ist der Übergang der Arretierungsvorrichtung von der Sperrsituation in die Verstellsituation dargestellt. Das Betätigungsmittel 36 ist bereits gegenüber dem Entriegelungselement 35 verschoben, aber noch nicht so sehr, dass die zahnförmige Struktur 32 von der gezahnten Struktur 30 gelöst ist und die Verstellvorrichtung entriegelt ist.

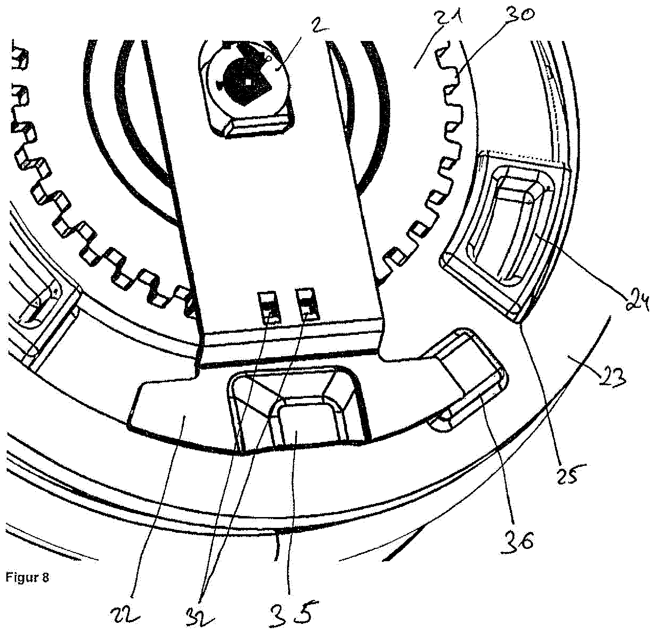

In Figur 8 ist die Arretierungsvorrichtung 20 in der Verstellsituation dargestellt. Die Adapterplatte 23 und damit das Betätigungsmittel 36 ist derart relativ zu dem zweiten Arretierungselement 22 und insbesondere dem Entriegelungselement 35 verschoben, dass das zweite Arretierungselement 22 in so ausreichender Weise in Richtung der Verschieberichtung 101 bewegt worden ist, dass sich die formschlüssige Verbindung zwischen der zahnförmigen Struktur 32 und der gezahnten Struktur 30 gelöst hat. Es ist deutlich zu erkennen, dass das gehäusefeste Begrenzungsmittel 24 in Zusammenspiel mit der Ausnehmung 25 in der Adapterplatte 23 eine weitere Drehung der Adapterplatte, hier gegen den Uhrzeigersinn, verhindert, die eine ungewollte Verriegelung zwischen dem ersten und dem zweiten Arretierungsmittel zur Folge hätte.

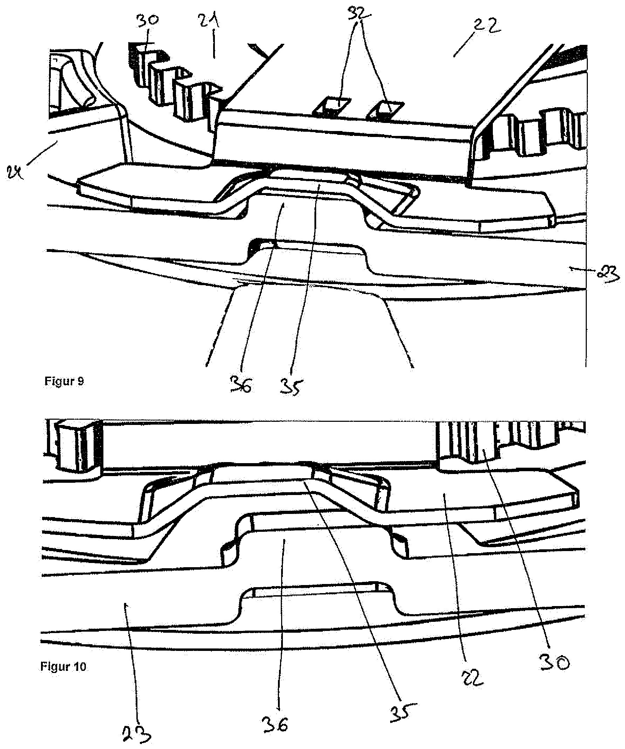

In Figur 9 ist eine schematische Schnittzeichnung der Arretierungsvorrichtung 20 in der Sperrsituation der Verstellvorrichtung 1 gezeigt. Das zweite Arretierungselement 22 liegt an der Adapterplatte 23 an und ist vorzugsweise in Richtung der Adapterplatte 23 vorgespannt. Das Entriegelungselement 35 nimmt das Betätigungsmittel 36 auf. Die gezahnte Struktur 30 und die zahnförmige Struktur 32 sind formschlüssig verbunden.

In Figur 10 ist eine schematische Schnittzeichnung der Arretierungsvorrichtung 20 beim Übergang von der Sperrsituation in die Verstellsituation der Verstellvorrichtung 1 dargestellt. Das zweite Arretierungselement 22 ist bereits so weit in die Verschieberichtung 101 verschoben, dass die Verstellvorrichtung 1 entriegelt ist, aber die Adapterplatte hat noch nicht den maximal möglichen Verstellweg zurückgelegt. Beispielsweise entspricht eine Drehung der Adapterplatte 23 um 4°einem Verstellweg des zweiten Arretierungselements 22 von 1 mm. Dies entspricht in dem Beispiel einer vollständigen Entriegelung. Dadurch, dass zwar eine Entriegelung der Arretierungselemente 21, 22 erfolgt ist, aber der Adapterplatte noch ein Verstellweg zur Verfügung steht, können vergleichsweise große Fertigungstoleranzen zugelassen werden.

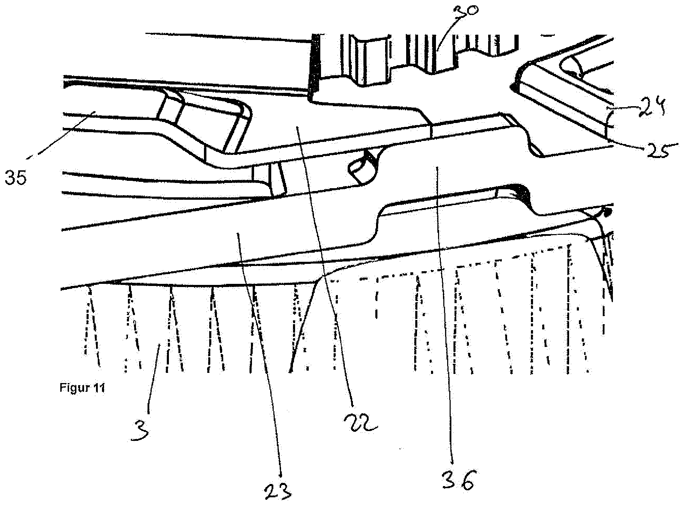

In Figur 11 ist eine schematische Schnittzeichnung der Arretierungsvorrichtung 20 in der Verstellsituation der Verstellvorrichtung dargestellt. Die Verstellvorrichtung 1 ist vollständig entriegelt und die Begrenzungsmittel 24 befinden sich in Anschlag mit den Begrenzungsmittelaufnahmemitteln 25. Beispielsweise hat sich hierbei die Adapterplatte 23 um 30°gedreht.

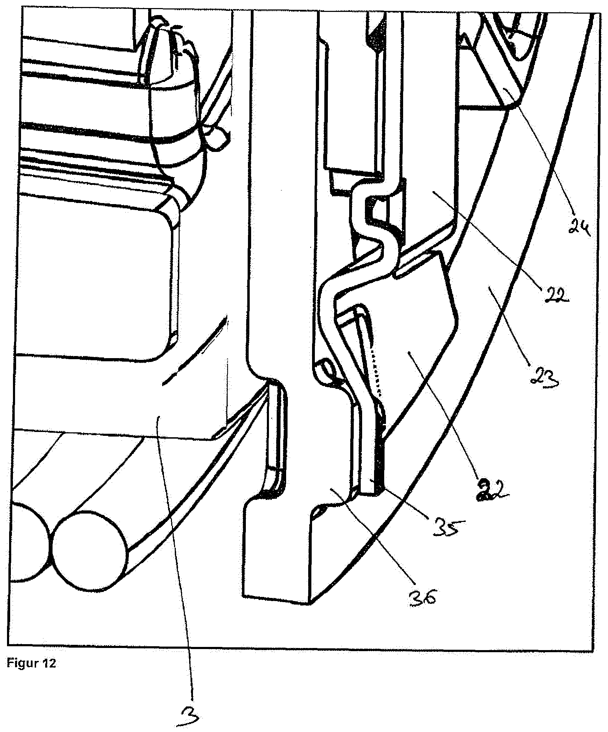

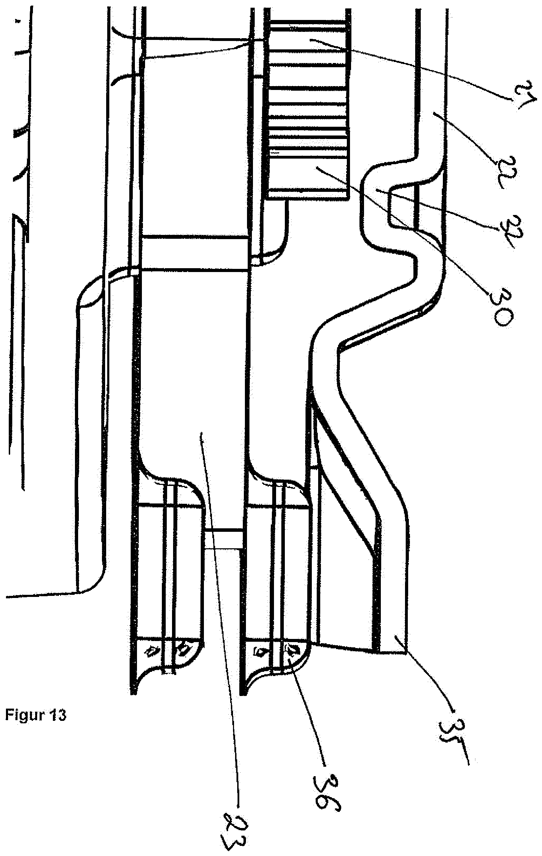

In Figur 12 ist die gleiche Situation wie in Figur 9 dargestellt. In Figur 13 ist die gleiche Situation wie in Figur 11 dargestellt.

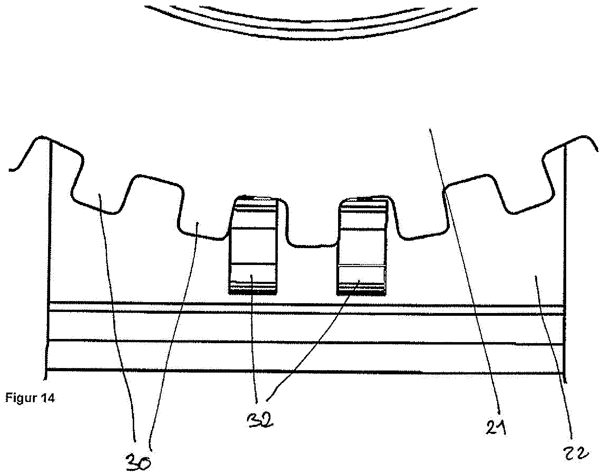

In Figur 14 ist die gleiche Situation wie in Figur 6 dargestellt, wobei hier die zahnförmige Struktur 32 derart relativ zu der gezahnten Struktur 30 angeordnet und/oder ausgebildet ist, dass ein gewisses Spiel zwischen den Arretierungselementen 21, 22 vorgesehen ist, das jedoch beispielsweise maximal 9,5°beträgt. Um diesen Winkel kann sich das Drehelement 2 relativ zu dem Gehäuse auch in der Verriegelungssituation bewegen.

Das Drehelement 2 wird in der Entriegelungsposition bzw. Verstellsituation vorzugsweise von einem um die Drehachse 100 drehbaren Antriebsmittel angetrieben. Das Drehelement 2 dient zur Betätigung einer Kraftfahrzeuginnenausstattungskomponente, beispielsweise eines Sitzhöhenverstellmechanismus, eines Sitzneigungsverstellmechanismus, eines Sitzlehnenneigungsverstellmechanismus, eines Lordosenstützenverstellmechanismus oder eines Kopfstützenverstellmechanismus.

### Bezugszeichenliste:

- 1: Verstellvorrichtung
- 2: Drehelement
- 3: Gehäuse
- 20: Arretierungsvorrichtung
- 21: erstes Arretierungselement
- 22: zweites Arretierungselement
- 23: Adapterplatte
- 24: Begrenzungsmittel
- 25: Begrenzungsmittelaufnahmemittel, Ausnehmung
- 30: Form- und/oder Kraftschlussmittel, gezahnte Struktur
- 31: Ausnehmung
- 32: Form- und/oder Kraftschlussmittel, zahnförmige Struktur
- 33: Ausnehmung
- 34: Befestigungsmittel
- 35: Entriegelungselement, Ausstülpung
- 35.1: schräge Fläche
- 36: Betätigungsmittel
- 37: Federmittel, Spiralfeder
- 100: Drehachse
- 101: Verschieberichtung
- A-A: Schnitt

## Patentansprüche

1. Verstellvorrichtung (1) für eine Kraftfahrzeuginnenausstattungskomponente mit einem Gehäuse (3), in dem ein Drehelement (2) um eine Drehachse (100) drehbar vorgesehen ist, wobei drehfest mit dem Drehelement (2) ein erstes Arretierungselement (21) vorgesehen ist, und an dem Gehäuse (3) ein zweites Arretierungselement (22) vorgesehen ist, die relativ zueinander von einer Sperrsituation, in der die Arretierungselemente (21, 22) form- und/oder kraftschlüssig miteinander zusammenwirken, in eine Verstellsituation, in der dieser Form- und/oder Kraftschluss aufgehoben ist, reversibel bewegbar sind und wobei die Verstellvorrichtung eine Adapterplatte (23) aufweist, **dadurch gekennzeichnet, dass** die Adapterplatte (23) drehbar zu dem Drehelement (2) und dem Gehäuse (3) vorgesehen ist und ein Arretierungselement (21, 22) zumindest zeitweise antreibt.

2. Verstellvorrichtung (1) nach Anspruch 1, **dadurch gekennzeichnet, dass** das zweite Arretierungselement (22) als Metallteil, insbesondere Blechteil vorgesehen ist.

3. Verstellvorrichtung (1) nach Anspruch 2, **dadurch gekennzeichnet, dass** ein zur Rückführung der Adapterplatte (23) in ihre ursprüngliche Position vorgesehenes Federelement, vorzugsweise in Richtung der Adapterplatte (23), vorgespannt ist.

4. Verstellvorrichtung (1) nach einem der voranstehenden Ansprüche, **dadurch gekennzeichnet, dass** das zweite Arretierungselement (22) ein Befestigungsmittel (34) aufweist, mit dem es an dem Gehäuse befestigt ist.

5. Verstellvorrichtung (1) nach Anspruch 4, **dadurch gekennzeichnet, dass** das Befestigungsmittel (34) ein Schnappverschluss ist.

6. Verstellvorrichtung (1) nach Anspruch 4 oder 5, **dadurch gekennzeichnet, dass** beabstandet von dem Befestigungsmittel (34) an dem zweiten Arretierungselement (22) ein Form- und/oder Kraftschlussmittel (32) vorgesehen ist, dass form- und/oder kraftschlüssig mit dem ersten Arretierungselement (21) in der Sperrsituation zusammenwirkt.

7. Verstellvorrichtung (1) nach Anspruch 6, **dadurch gekennzeichnet, dass** das Form- und/oder Kraftschlussmittel durch Umformen, Urformen oder spanabhebend in das Material des zweiten Arretierungselementes (22) eingearbeitet ist.

8. Verstellvorrichtung (1) nach einem der voranstehenden Ansprüche, **dadurch gekennzeichnet, dass** an dem zweiten Arretierungselement, insbesondere beabstandet von dem Befestigungsmittel (34), ein Entriegelungselement (35) vorgesehen ist, das mit einem Betätigungsmittel (36), das an der Adapterplatte (23) vorgesehen ist, zusammenwirkt.

9. Verstellvorrichtung (1) nach Anspruch 8, **dadurch gekennzeichnet, dass** das Entriegelungselement als Ausstülpung (35) und/oder Einbuchtung in dem Material des zweiten Arretierungselementes vorgesehen ist.

10. Verstellvorrichtung (1) nach einem der voranstehenden Ansprüche, **dadurch gekennzeichnet, dass** sich das zweite Arretierungsmittel (22) von der Sperrsituation in die Verstellsituation zumindest abschnittsweise entlang einer Verschieberichtung (101) bewegt.

11. Verstellvorrichtung (1) nach Anspruch 9, **dadurch gekennzeichnet, dass** die Ausstülpung (35) relativ zu der Verschieberichtung eine schräge Fläche (35.1) aufweist.

12. Verstellvorrichtung (1) nach einem der voranstehenden Ansprüche, **dadurch gekennzeichnet, dass** sie Teil eines Fahrzeugsitzes ist.

## Claims

1. Adjusting device (1) for a motor vehicle interior component, comprising a housing (3) in which a rotational element (2) is provided in a rotatable manner about a rotation axis (100), wherein a first locking element (21) is rotationally fixed to the rotational element (2), and a second locking element (22) is provided on the housing (3), said locking elements being reversibly movable relative to each other from a locked situation, in which the locking elements (21, 22) interact with each other in a positively and/or non-positively engaged manner, into an adjustment situation, in which said positive and/or non-positive engagement is released, and wherein the adjusting device has an adapter plate (23), **characterized in that** the adapter plate (23) is provided in a rotatable manner relative to the rotational element (2) and the housing (3) and at least temporarily drives a locking element (21, 22) .

2. Adjusting device (1) according to Claim 1, **characterized in that** the second locking element (22) is provided as a metal part, in particular sheet metal part.

3. Adjusting device (1) according to Claim 2, **characterized in that** a spring element, which is provided for returning the adapter plate (23) into the original position thereof, is pretensioned, preferably in the direction of the adapter plate (23) .

4. Adjusting device (1) according to one of the preceding claims, **characterized in that** the second locking element (22) has a fastening means (34) with which said locking element is fastened to the housing.

5. Adjusting device (1) according to Claim 4, **characterized in that** the fastening means (34) is a snap fastener.

6. Adjusting device (1) according to Claim 4 or 5, **characterized in that** a positive and/or non-positive engagement means (32) is provided on the second locking element (22) at a distance from the fastening means (34) and interacts in a positively and/or non-positively engaged manner with the first locking element (21) in the locked situation.

7. Adjusting device (1) according to Claim 6, **characterized in that** the positive and/or non-positive engagement means is incorporated into the material of the second locking element (22) by deformation, primary forming or cutting.

8. Adjusting device (1) according to one of the preceding claims, **characterized in that** an unlocking element (35) which interacts with an actuating means (36), which is provided on the adapter plate (23), is provided on the second locking element, in particular at a distance from the fastening means (34).

9. Adjusting device (1) according to Claim 8, **characterized in that** the unlocking element is provided as a protuberance (35) and/or indentation in the material of the second locking element.

10. Adjusting device (1) according to any of the preceding claims, **characterized in that** the second locking means (22) moves at least in sections along a displacement direction (101) from the locked situation into the adjustment situation.

11. Adjusting device (1) according to Claim 9, **characterized in that** the protuberance (35) has an oblique surface (35.1) relative to the displacement direction.

12. Adjusting device (1) according to one of the preceding claims, **characterized in that** said adjusting device is part of a vehicle seat.

## Revendications

1. Dispositif de réglage (1) d'un composant d'équipement intérieur de véhicule automobile, comprenant un boîtier (3) dans lequel est prévu un élément rotatif (2) pouvant tourner autour d'un axe de rotation (100), un premier élément de blocage (21) étant prévu de manière solidaire en rotation avec l'élément rotatif (2), et un deuxième élément de blocage (22) étant prévu sur le boîtier (3), lesquels peuvent être déplacés de manière réversible l'un par rapport à l'autre à partir d'une situation de blocage dans laquelle les éléments de blocage (21, 22) coopèrent l'un avec l'autre par engagement par correspondance de formes et/ou par force, dans une position de réglage dans laquelle cet engagement par correspondance de formes et/ou par force est supprimé, et le dispositif de réglage présentant une plaque d'adaptateur (23), **caractérisé en ce que** la plaque d'adaptateur (23) est prévue de manière à pouvoir tourner par rapport à l'élément rotatif (2) et au boîtier (3) et entraîne au moins temporairement un élément de blocage (21, 22).

2. Dispositif de réglage (1) selon la revendication 1, **caractérisé en ce que** le deuxième élément de blocage (22) est prévu sous forme de pièce métallique, en particulier sous forme de pièce en tôle.

3. Dispositif de réglage (1) selon la revendication 2, **caractérisé en ce qu'**un élément de ressort prévu pour ramener la plaque d'adaptateur (23) dans sa position initiale est de préférence précontraint dans la direction de la plaque d'adaptateur (23).

4. Dispositif de réglage (1) selon l'une quelconque des revendications précédentes, **caractérisé en ce que** le deuxième élément de blocage (22) présente un moyen de fixation (34) avec lequel il est fixé au boîtier.

5. Dispositif de réglage (1) selon la revendication 4, **caractérisé en ce que** le moyen de fixation (34) est une fermeture à encliquetage.

6. Dispositif de réglage (1) selon la revendication 4 ou 5, **caractérisé en ce qu'**il est prévu un moyen d'engagement par correspondance de formes et/ou par force (32) à distance du moyen de fixation (34) sur le deuxième élément de blocage (22), lequel coopère par engagement par correspondance de formes et/ou par force avec le premier élément de blocage (21) dans la situation de blocage.

7. Dispositif de réglage (1) selon la revendication 6, **caractérisé en ce que** le moyen d'engagement par correspondance de formes et/ou par force est incorporé par formage, formage primaire, ou par usinage par enlèvement de copeaux dans le matériau du deuxième élément de blocage (22).

8. Dispositif de réglage (1) selon l'une quelconque des revendications précédentes, **caractérisé en ce qu'**au niveau du deuxième élément de blocage, en particulier à distance du moyen de fixation (34), est prévu un élément de déverrouillage (35) qui coopère avec un moyen d'actionnement (36) qui est prévu au niveau de la plaque d'adaptateur (23).

9. Dispositif de réglage (1) selon la revendication 8, **caractérisé en ce que** l'élément de déverrouillage est prévu en tant que protubérance (35) et/ou au renfoncement dans le matériau du deuxième élément de blocage.

10. Dispositif de réglage (1) selon l'une quelconque des revendications précédentes, **caractérisé en ce que** le deuxième moyen de blocage (22) se déplace de la situation de blocage dans la situation de réglage au moins en partie le long d'une direction de déplacement (101).

11. Dispositif de réglage (1) selon la revendication 9, **caractérisé en ce que** la protubérance (35) présente une surface oblique (35.1) par rapport à la direction de déplacement.

12. Dispositif de réglage (1) selon l'une quelconque des revendications précédentes, **caractérisé en ce qu'**il fait partie d'un siège de véhicule.
